# EUROPÄISCHE PATENTSCHRIFT

(11) **EP 4 374 476 B1**
(45) Veröffentlichungstag und Bekanntmachung des Hinweises auf die Patenterteilung: **19.08.2026**
(21) Anmeldenummer: 22735086.5
(22) Anmeldetag: 08.06.2022
(51) Int. Cl.: H02K 3/24, H02K 9/19, H02K 3/487

(54) **STATOR EINER ELEKTRISCHEN MASCHINE**
STATOR OF AN ELECTRIC MACHINE
STATOR D'UNE MACHINE ÉLECTRIQUE

(30) Priorität: 23.07.2021 DE 102021207921
(43) Veröffentlichungstag der Anmeldung: 29.05.2024
(73) Patentinhaber: Robert Bosch GmbH, 70442 Stuttgart (DE)
(72) Erfinder: BENSING, Felix, 70437 Stuttgart (DE); KUEHBACHER, Daniel, 70569 Stuttgart (DE); FRUEHAUF, Patrick, 74534 Besigheim (DE)
(86) Internationale Anmeldenummer: PCT/EP2022/065455
(87) Internationale Veröffentlichungsnummer: WO 2023/001446

(56) Entgegenhaltungen:
- CN-B- 102 420 468
- DE-A1- 102019 113 785
- JP-U- S5 449 520

## Beschreibung

### Stand der Technik

Die Erfindung geht aus von einem Stator einer elektrischen Maschine nach der Gattung des Hauptanspruchs.

Es ist schon ein Stator einer elektrischen Maschine aus der DE102019113785 A1 bekannt, mit einer Statorachse und mit einem Blechpaket, an dem Statorzähne und zwischen den Statorzähnen liegende Statornuten ausgebildet sind und das eine Vielzahl von Blechlamellen umfasst, wobei die Statorzähne über ein ringförmiges Statorjoch miteinander verbunden sind, wobei in den Statornuten jeweils ein mehrere Leiter umfassendes Leiterbündel zur Bildung einer elektrischen Statorwicklung vorgesehen ist, wobei die Statornuten jeweils einen dem Statorjoch zugewandten Nutgrund und einen dem Nutgrund abgewandten Nutschlitz, der insbesondere zwischen zwei Zahnköpfen der jeweiligen Statorzähne gebildet ist, aufweisen, wobei in den Statornuten jeweils mehrere, in axialer Richtung bezüglich der Statorachse voneinander beabstandete Stützstellen zur Abstützung des in der jeweiligen Statornut liegenden Leiterbündels gebildet sind, wobei zwischen dem Nutgrund der jeweiligen Statornut und dem in der Statornut angeordneten Leiterbündel ein sich in axialer Richtung erstreckender Nutgrundkanal gebildet ist, der von einem Kühlmedium, insbesondere Öl, entlang einem Kühlpfad zwischen einem Nuteinlass und einem Nutauslass der jeweiligen Statornut durchströmbar ist. und sich in radialer Richtung bis in den Bereich der Zahnflanken der jeweiligen Statornut erstreckt. Weiter werden zwischen den Zahnflanken der jeweiligen Statornut und dem in der Statornut angeordneten Leiterbündel Zahnflankenkanäle gebildet, die von dem Kühlmedium, entlang dem Kühlpfad durchströmbar sind.

Der Nutgrundkanal und die Zahnflankenkanäle der jeweiligen Statornut werden in axialer Richtung durchströmt, wobei sich das Kühlmedium in der jeweiligen Statornut in Strömungsrichtung zunehmend erwärmt. Es ist schwierig, eine gleichmäßige Durchströmung der jeweiligen Statornut im Bereich des Nutgrundkanals und der beiden Zahnflankenkanäle sicherzustellen, beispielsweise angesichts von Herstellungstoleranzen. Dadurch kann es zu einer geringeren Kühlwirkung an den jeweils schwächer umströmten Leitern des Leiterbündels kommen. So kann in der jeweiligen Statornut in radialer Richtung gesehen eine ungleichmäßige Kühlwirkung auftreten, da beispielsweise die radial inneren und sich am stärksten erwärmenden Leiter des Leiterbündels am schlechtesten gekühlt werden (infolge der geringsten Temperaturdifferenz zwischen dem entsprechenden Leiter und dem Kühlmedium und/oder infolge der schwächeren Umströmung). Die ungleichmäßige Kühlung des Leiterbündels in der jeweiligen Statornut kann die Leistung und die Lebensdauer der elektrischen Maschine nachteilig beeinträchtigen.

### Vorteile der Erfindung

Der erfindungsgemäße Stator der elektrischen Maschine mit den kennzeichnenden Merkmalen des Hauptanspruchs hat demgegenüber den Vorteil, dass das Leiterbündel der jeweiligen Statornut in radialer Richtung gesehen gleichmäßiger gekühlt wird, indem alle Leiter des Leiterbündels im wesentlichen gleich gut, also mit gleich starker Umströmung, gekühlt werden.

Dies wird erfindungsgemäß erreicht, indem im Nutschlitz der jeweiligen Statornut ein sich in axialer Richtung erstreckender Nutschlitzkanal gebildet ist, der mit dem Nutgrundkanal derselben Statornut an zumindest einer Verteilerstelle über eine in radialer Richtung bezüglich der Statorachse verlaufende Verteilerverbindung strömungsverbunden ist und indem der Kühlpfad der Statornut derart ausgebildet ist, dass eine Kühlströmung vom Nutzschlitzkanal über die zumindest eine Verteilerverbindung in den Nutgrundkanal und/oder umgekehrt erzwungen ist.

Die Verteilerverbindung erzeugt in der jeweiligen Statornut jeweils eine radiale Kühlströmung, die an allen Leitern des Leiterbündels eine ähnliche oder gleich gute Kühlwirkung erzeugt.

Durch die in den Unteransprüchen aufgeführten Maßnahmen sind vorteilhafte Weiterbildungen und Verbesserungen des im Hauptanspruch angegebenen Stators einer elektrischen Maschine möglich.

Nach einem ersten Ausführungsbeispiel ist der Nuteinlass der jeweiligen Statornut an einem Ende des Nutschlitzkanals (und insbesondere nur dort) und der Nutauslass derselben Statornut an einem dem Nuteinlass abgewandten Ende des Nutgrundkanals (und insbesondere nur dort) vorgesehen. Auf diese Weise wird durch die radiale Lage des Nuteinlasses und des Nutauslasses eine Kühlströmung in der Statornut vom Nuteinlass ausgehend vom Nutzschlitzkanal über die zumindest eine Verteilerverbindung in den Nutgrundkanal und von dort in Richtung Nutauslass erzwungen. Die Kühlströmung ist also so gewählt, dass das Kühlmedium radial innen in die Statornut ein- und radial außen aus der Statornut ausströmt, so dass die radial inneren Leiter mit kälterem Kühlmedium umströmt werden als die radial äußeren Leiter, was zu einer weiteren Verbesserung bzw. Vergleichmäßigung der Kühlwirkung führt. Alternativ kann der Nuteinlass der jeweiligen Statornut an einem Ende des Nutgrundkanals und der Nutauslass derselben Statornut an einem dem Nuteinlass abgewandten Ende des Nutschlitzkanals angeordnet sein.

Nach einer alternativen Ausführung sind der Nuteinlass und der Nutauslass derselben Statornut beide entweder an gegenüberliegenden Ende des Nutschlitzkanals oder an gegenüberliegenden Enden des Nutgrundkanals vorgesehen, wobei im Nutschlitzkanal bzw. im Nutgrundkanal ein Verschluss- oder Drosselelement vorgesehen ist zum Schließen oder Drosseln eines die Verteilerverbindung(en) umgehenden Kurzschlusspfads. Auf diese Weise wird in der Statornut ein mäanderförmiger Kühlpfad erzeugt, der zumindest zwei Verteilerverbindungen umfasst, die in radialer Richtung gesehen entgegengesetzt durchströmt werden.

Die Verteilerverbindung kann in vorteilhafter Weise jeweils durch das Leiterbündel hindurch und/oder um das Leiterbündel herum führen.

Die Verteilerverbindung kann vorteilhafterweise jeweils durch zumindest eine kanalförmige oder nutförmige Einbuchtung am Leiterbündel oder durch zumindest einen Durchgangskanal durch das Leiterbündel oder durch zumindest einen vergrößerten Nutspalt zwischen Wandungen der Statornut und dem Leiterbündel gebildet sein.

Besonders vorteilhaft ist, wenn in der jeweiligen Statornut mehrere in axialer Richtung beabstandete Verteilerverbindungen vorgesehen sind. Auf diese Weise wird die gleichmäßige radiale Kühlung des Leiterbündels entlang der axialen Richtung besser vergleichmäßigt.

Weiterhin vorteilhaft ist, dass der Nutschlitzkanal der jeweiligen Statornut nach radial innen mit einem Nutverschluss abgedichtet ist. Auf diese Weise ist der Nutschlitzkanal in axialer Richtung durchströmbar, insbesondere durchgängig. Der Nutverschluss kann ein in der Statornut angeordnetes Verschlusselement oder eine radial innen an den Statorzähnen des Stators anliegende Verschlusshülse, beispielsweise ein Spaltrohr, sein. Die Verschlusshülse würde alle Statornuten des Stators verschließen.

Sehr vorteilhaft ist es, wenn der Nutgrundkanal der jeweiligen Statornut durch eine nutförmige Ausnehmung im Nutgrund der Statornut gebildet ist. Dadurch kann auf einfache Weise im Nutgrund ein Nutschlitzkanal mit ausreichend großem Strömungsquerschnitt gebildet werden.

Darüber hinaus vorteilhaft ist, wenn die Stützstellen gebildet sind durch Verdrehen von zumindest zwei Stützscheiben, insbesondere Blechlamellen, des Blechpakets um einen bestimmten Verdrehwinkel um die Statorachse oder durch in der jeweiligen Statornut ausgebildete Halteelemente. Auf diese Weise wird das Leiterbündel der jeweiligen Statornut an der jeweiligen Stützstelle zwischen zwei Zahnflanken gehalten, beispielsweise eingeklemmt. Alternativ können die Stützstellen durch Halteelemente der jeweiligen Stützeinrichtung gebildet sein, die beispielsweise als separate oder einstückige Elemente ausgeführt sind.

Die Erfindung betrifft weiterhin eine elektrische Maschine mit einem Gehäuse, in dem ein erfindungsgemäßer Stator angeordnet ist, wobei die Statorwicklung an jeder Stirnseite des Stators einen Wickelkopf bildet, wobei innerhalb des Gehäuses an jeder Stirnseite des Stators ein den jeweiligen Wickelkopf aufnehmender Wickelkopfkühlraum zur Kühlung des jeweiligen Wickelkopfes vorgesehen ist, wobei die Statornuten ausgehend von einem der beiden Wickelkopfkühlräume über den erfindungsgemäßen Kühlpfad der Statornuten bis in den anderen Wickelkopfkühlraum durchströmbar sind. Auf diese Weise kann eine besonders gute Kühlung des Stators erreicht werden.

### Zeichnung

Ein Ausführungsbeispiel der Erfindung ist in der Zeichnung vereinfacht dargestellt und in der nachfolgenden Beschreibung näher erläutert.
- Fig.1: zeigt eine Teilansicht eines erfindungsgemäßen Stators einer elektrischen Maschine,
- Fig.2: eine Schnittansicht des Stators nach Fig.1 mit einem erfindungsgemäß in einer der Statornuten an mehreren Stützstellen gelagerten Leiterbündel,
- Fig.3: eine Schnittansicht des Stators für einen Schnitt entlang der Linie III-III nach Fig.2 und
- Fig.4: eine Teilansicht einer elektrischen Maschine im Längsschnitt mit dem erfindungsgemäßen Stator nach Fig.1 bis Fig.3.

### Beschreibung des Ausführungsbeispiels

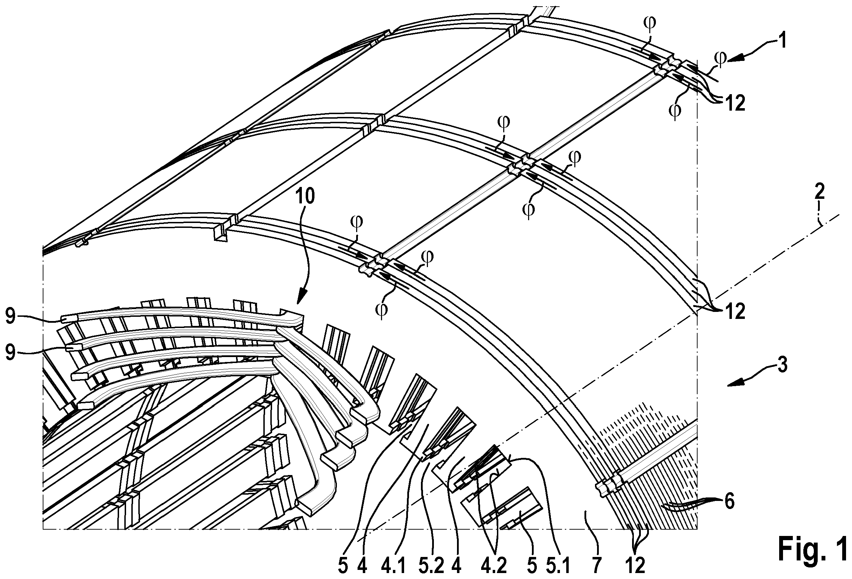

Fig.1 zeigt eine Teilansicht eines erfindungsgemäßen Stators einer elektrischen Maschine.

Der Stator 1 einer elektrischen Maschine hat eine Statorachse 2 und umfasst ein Blechpaket 3, an dem Statorzähne 4 und zwischen den Statorzähnen 4 liegende Statornuten 5 ausgebildet sind und das durch einen Stapel von Blechlamellen 6 gebildet ist.

Die Statorzähne 4 sind über ein ringförmiges Statorjoch 7 des Blechpakets 3 miteinander verbunden und können einen Zahnkopf 4.1 aufweisen. In den Statornuten 5 ist jeweils ein mehrere Leiter 9 umfassendes Leiterbündel 10 zur Bildung einer elektrischen Statorwicklung 8 vorgesehen. Zur Veranschaulichung der Erfindung ist in Fig.1 nur in einer der Statornuten 5 ein Leiterbündel 10 dargestellt.

Die Leiter 9 des Stators 1 können jeweils als Flachdrahtleiter ausgeführt sein, der jeweils einen viereckigen, insbesondere rechteckförmigen Leiterquerschnitt aufweist. Weiterhin können die Leiter 9 des Stators 1 jeweils als Hairpin- oder als I-Pin-Leiterelement ausgebildet sein. Die Leiter 9 sind beispielsweise in bekannter Weise mit einem Isolierlack beschichtet.

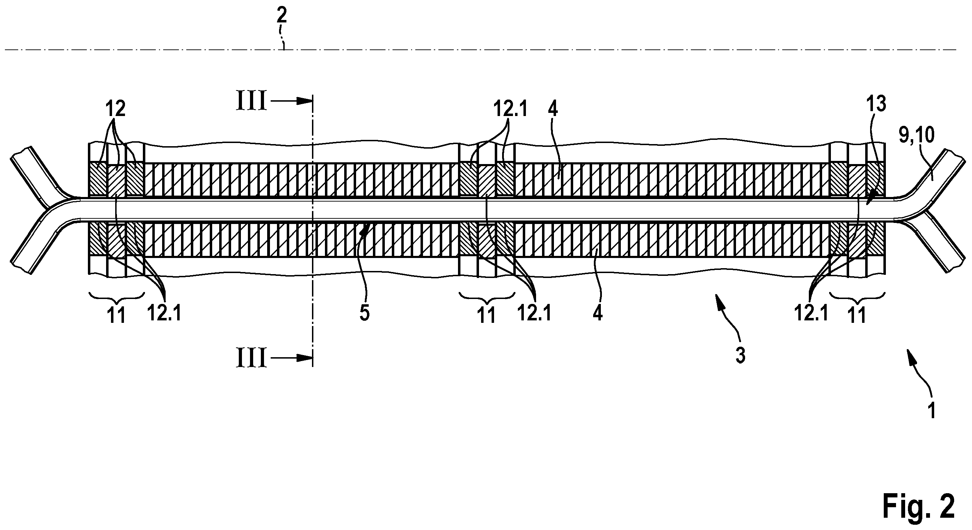

Fig.2 zeigt eine Schnittansicht des Stators nach Fig.1 mit einem erfindungsgemäß in einer der Statornuten an mehreren Stützstellen gelagerten Leiterbündel.

Wie in Fig.2 gezeigt, sind in den Statornuten 5 jeweils mehrere, beispielsweise drei, in axialer Richtung bezüglich der Statorachse 2 voneinander beabstandete Stützstellen 11 zur Einklemmung, Einspannung oder Abstützung des in der jeweiligen Statornut 5 liegenden Leiterbündels 10 gebildet.

Die Stützstellen 11 können beispielsweise gebildet sein durch Verdrehen von zumindest zwei Stützscheiben 12, beispielsweise Blechlamellen 6, des Blechpakets 3 um einen bestimmten Verdrehwinkel ϕ um die Statorachse 2 oder alternativ durch in der jeweiligen Statornut 5 ausgebildete, nicht dargestellte Halteelemente. Durch das entgegengesetzte Verdrehen der Stützscheiben 12 zur Bildung der jeweiligen Stützstelle 11 werden Stützabschnitte 12.1 der Stützscheiben 12 gebildet sind, die von gegenüberliegenden Seiten der Statornut 5 in die jeweilige Statornut 5 vorstehen, um das Leiterbündel 10 zwischen den Stützabschnitten 12.1 an Halteflächen 13 des Leiterbündels 10 zu halten, beispielsweise einzuklemmen. Die verdrehten Stützscheiben 12 sind im Blechpaket 3 gegen weiteres Verdrehen fixiert, insbesondere durch stoffschlüssiges Fügen, so dass stabile und dauerhaltbare Stützstellen 11 im Blechpaket 3 gebildet sind.

Zwischen den erfindungsgemäßen Stützstellen 11 ist das Leiterbündel 10 der jeweiligen Statornut 5 beispielsweise frei schwebend, also ohne Kontakt zum Blechpaket 3, gelagert. Das Leiterbündel 10 der jeweiligen Statornut 5 ist also beispielsweise nur an den Stützstellen 11 mit dem Blechpaket 6 in Kontakt.

Zwischen dem Leiterbündel 10 der jeweiligen Statornut 5 und der jeweiligen Stützstelle 11 kann eine nicht dargestellte Schutzschicht vorgesehen sein, die insbesondere manschettenförmig, hülsenförmig, schlauchförmig, klammerförmig, U-förmig, streifenförmig oder flachbandförmig ausgebildet ist.

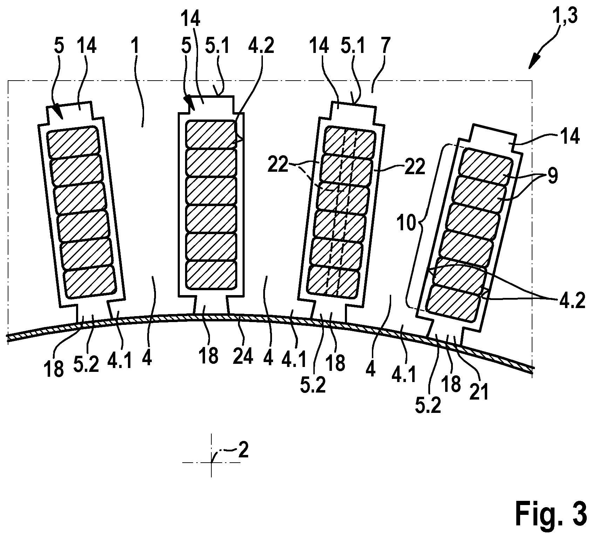

Fig.3 zeigt eine Schnittansicht des Stators für einen Schnitt entlang der Linie III-III nach Fig.2.

Die Statornuten 5 haben jeweils einen dem Statorjoch 7 zugewandten Nutgrund 5.1 und einen dem Nutgrund 5.1 abgewandten Nutschlitz 5.2, der insbesondere zwischen zwei Zahnköpfen 4.1 der jeweiligen Statorzähne 4 gebildet ist.

Zwischen dem Nutgrund 5.1 der jeweiligen Statornut 5 und dem in der Statornut 5 angeordneten Leiterbündel 10 ist ein sich in axialer Richtung bezüglich der Statorachse 2 erstreckender Nutgrundkanal 14 gebildet, der von einem Kühlmedium, insbesondere Öl, entlang einem Kühlpfad 15 zwischen einem Nuteinlass 16 und einem Nutauslass 17 der jeweiligen Statornut 5 zumindest abschnittsweise durchströmbar ist. Der Nuteinlass 16 der jeweiligen Statornut 5 ist jeweils an einer der beiden Stirnseiten des Blechpakets 3 und der Nutauslass 17 derselben Statornut 5 an der anderen Stirnseite des Blechpakets 3 angeordnet.

Erfindungsgemäß ist vorgesehen, dass im Nutschlitz 5.2 der jeweiligen Statornut 5 ein sich in axialer Richtung bezüglich der Statorachse 2 erstreckender Nutschlitzkanal 18 gebildet ist, der mit dem Nutgrundkanal 14 derselben Statornut 5 an zumindest einer Verteilerstelle 21 über eine in radialer Richtung bezüglich der Statorachse 2 verlaufende Verteilerverbindung 22 strömungsverbunden ist und dass der Kühlpfad 15 der Statornut 5 derart ausgebildet ist, dass eine Kühlströmung vom Nutzschlitzkanal 18 über die zumindest eine Verteilerverbindung 22 in den Nutgrundkanal 14 und/oder umgekehrt erzwungen ist. Auf diese Weise wird das Leiterbündel 10 der jeweiligen Statornut 5 in radialer Richtung gesehen gleichmäßiger gekühlt. Die Verteilerverbindung 22 erzeugt in der jeweiligen Statornut 5 jeweils eine radiale Kühlströmung zur Erreichung der besseren bzw. gleichmäßigeren Kühlung des Leiterbündels 10.

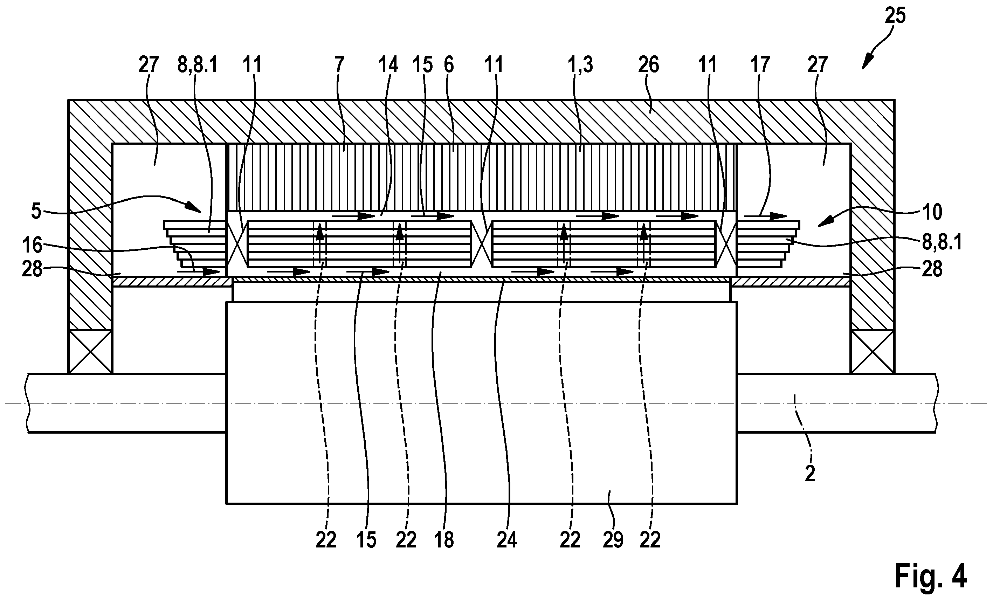

Fig.4 zeigt eine Teilansicht einer elektrischen Maschine im Längsschnitt mit dem erfindungsgemäßen Stator nach Fig.1 bis Fig.3.

Nach dem Ausführungsbeispiel ist der Nuteinlass 16 der jeweiligen Statornut 5 an einem Ende des Nutschlitzkanals 18 und der Nutauslass 17 derselben Statornut 5 an einem dem Nuteinlass 16 abgewandten Ende des Nutgrundkanals 14 vorgesehen, wodurch die Kühlströmung in der Statornut 5 durch die zumindest eine Verteilerverbindung 22 erzwungen wird. Dabei strömt die Kühlströmung vom Nuteinlass 16 in den Nutschlitzkanal 18, von dort über die zumindest eine Verteilerverbindung 22 in den Nutgrundkanal 14 und von dort schließlich in den Nutauslass 17. Der Nutauslass 17 der jeweiligen Statornut 5 ist also ausschließlich über die zumindest eine Verteilerverbindung 22 mit dem Nuteinlass 16 derselben Statornut 5 verbunden oder umgekehrt.

Alternativ kann der Nuteinlass 16 der jeweiligen Statornut 5 auch an einem Ende des Nutgrundkanals 14 und der Nutauslass 17 derselben Statornut 5 an einem dem Nuteinlass 16 abgewandten Ende des Nutschlitzkanals 18 angeordnet sein.

Nach einem weiteren, nicht dargestellten Ausführungsbeispiel kann der Nuteinlass 16 und der Nutauslass 17 derselben Statornut 5 beide entweder an gegenüberliegenden Enden des Nutschlitzkanals 18 oder an gegenüberliegenden Enden des Nutgrundkanals 14 vorgesehen sein, wobei im Nutschlitzkanal 18 bzw. im Nutgrundkanal 14 ein Verschluss- oder Drosselelement vorgesehen ist zum Schließen oder Drosseln eines die Verteilerverbindung(en) 22 umgehenden Kurzschlusspfads. Auf diese Weise wird in der Statornut ein mäanderförmiger Kühlpfad erzeugt, der zumindest zwei Verteilerverbindungen 22 umfasst, die in radialer Richtung gesehen entgegengesetzt durchströmt werden.

Die Verteilerverbindung 22 kann jeweils durch das Leiterbündel 10 hindurch und/oder um das Leiterbündel 10 herum führen. Beispielsweise kann die Verteilerverbindung 22 jeweils durch zumindest eine kanalförmige oder nutförmige Einbuchtung am Leiterbündel 10 und/oder durch zumindest einen Durchgangskanal 23 durch das Leiterbündel 10 oder durch zumindest einen vergrößerten Nutspalt zwischen Wandungen der Statornut 5 und dem Leiterbündel 10 gebildet sein.

In der jeweiligen Statornut 5 können mehrere in axialer Richtung beabstandete Verteilerverbindungen 22 vorgesehen sein.

Der Nutschlitzkanal 18 der jeweiligen Statornut 5 ist nach radial innen mit einem Nutverschluss 24 abgedichtet, der beispielsweise eine hohlzylinderförmige Verschlusshülse ist, die alle Statornuten 5 bzw. Nutschlitzkanäle 18 gemeinsam abdichtet.

Der Nutgrundkanal 14 der jeweiligen Statornut 5 kann beispielsweise durch eine nutförmige Ausnehmung im Nutgrund 5.1 der Statornut 5 gebildet sein.

Die elektrische Maschine 25 hat ein Gehäuse 26, in dem ein erfindungsgemäßer Stator 1 angeordnet ist. Die Statorwicklung 8 bildet an jeder Stirnseite des Stators 1 einen Wickelkopf 8.1. Innerhalb des Gehäuses 26 ist an jeder Stirnseite des Stators 1 ein den jeweiligen Wickelkopf 8.1 aufnehmender Wickelkopfkühlraum 27 zur Kühlung des jeweiligen Wickelkopfes 8.1 vorgesehen. Die Statornuten 5 des Stators 1 sind dabei ausgehend von einem der beiden Wickelkopfkühlräume 27 bis in den anderen Wickelkopfkühlraum 27 durchströmbar, beispielsweise parallel, in Reihe oder mit einer Kombination von parallel und in Reihe, insbesondere über die erfindungsgemäßen Kühlpfade 15 der Statornuten 5.

Der jeweilige Wickelkopfkühlraum 27 ist nach radial innen bezüglich der Statorachse 2 von einer Ringwandung 28, beispielsweise einer Dichthülse, begrenzt. Die Ringwandung 28 kann beispielsweise zur Bildung eines sogenannten Spaltrohres und/oder des Nutverschlusses 24 in einen zwischen dem Stator 1 und einem Rotor 29 der elektrischen Maschine 25 gebildeten Luftspalt reichen und diesen in axialer Richtung bezüglich der Statorachse 2 durchragen.

## Patentansprüche

1. Stator (1) einer elektrischen Maschine (25) mit einer Statorachse (2) und mit einem Blechpaket (3), an dem Statorzähne (4) und zwischen den Statorzähnen (4) liegende Statornuten (5) ausgebildet sind und das eine Vielzahl von Blechlamellen (6) umfasst, wobei die Statorzähne (4) über ein ringförmiges Statorjoch (7) miteinander verbunden sind, wobei in den Statornuten (5) jeweils ein mehrere Leiter (9) umfassendes Leiterbündel (10), insbesondere ein Stapel von Flachdrahtleitern, zur Bildung einer elektrischen Statorwicklung (8) vorgesehen ist, wobei die Statornuten (5) jeweils einen dem Statorjoch (7) zugewandten Nutgrund (5.1) und einen dem Nutgrund (5.1) abgewandten Nutschlitz (5.2), der insbesondere zwischen zwei Zahnköpfen (4.1) der jeweiligen Statorzähne (4) gebildet ist, aufweisen, wobei in den Statornuten (5) jeweils mehrere, in axialer Richtung bezüglich der Statorachse (2) voneinander beabstandete Stützstellen (11) zur Abstützung des in der jeweiligen Statornut (5)liegenden Leiterbündels (10) gebildet sind, wobei zwischen dem Nutgrund (5.1) der jeweiligen Statornut (5) und dem in der Statornut (5) angeordneten Leiterbündel (10) ein sich in axialer Richtung erstreckender Nutgrundkanal (14) gebildet ist, der von einem Kühlmedium, insbesondere Öl, entlang einem Kühlpfad (15) zwischen einem Nuteinlass (16) und einem Nutauslass (17) der jeweiligen Statornut (5) zumindest abschnittsweise durchströmbar ist,
**dadurch gekennzeichnet, dass**
im Nutschlitz (5.2) der jeweiligen Statornut (5) ein sich in axialer Richtung erstreckender Nutschlitzkanal (18) gebildet ist, der mit dem Nutgrundkanal (14) derselben Statornut (5) an zumindest einer Verteilerstelle (21) über eine in radialer Richtung bezüglich der Statorachse (2) verlaufende Verteilerverbindung (22) strömungsverbunden ist und dass der Kühlpfad (15) der Statornut (5) derart ausgebildet ist, dass eine Kühlströmung vom Nutzschlitzkanal (18) über die zumindest eine Verteilerverbindung (22) in den Nutgrundkanal (14) und/oder umgekehrt erzwungen ist.

2. Stator nach Anspruch 1, **dadurch gekennzeichnet, dass** der Nuteinlass (16) der jeweiligen Statornut (5) an einem Ende des Nutschlitzkanals (18) und der Nutauslass (17) derselben Statornut (5) an einem dem Nuteinlass (16) abgewandten Ende des Nutgrundkanals (14) vorgesehen ist oder dass der Nuteinlass (16) der jeweiligen Statornut (5) an einem Ende des Nutgrundkanals (14) und der Nutauslass (17) derselben Statornut (5) an einem dem Nuteinlass (16) abgewandten Ende des Nutschlitzkanals (18) angeordnet ist.

3. Stator nach Anspruch 1, **dadurch gekennzeichnet, dass** der Nuteinlass (16) und der Nutauslass (17) derselben Statornut (5) beide entweder an gegenüberliegenden Enden des Nutschlitzkanals (18) oder an gegenüberliegenden Enden des Nutgrundkanals (14) vorgesehen sind, wobei im Nutschlitzkanal (18) bzw. im Nutgrundkanal (17) ein Verschluss- oder Drosselelement vorgesehen ist zum Schließen oder Drosseln eines die Verteilerverbindung(en) (22) umgehenden Kurzschlusspfads.

4. Stator nach einem der vorhergehenden Ansprüche, **dadurch gekennzeichnet, dass** die Verteilerverbindung (22) jeweils durch das Leiterbündel (10) hindurch und/oder um das Leiterbündel (10) herum führt.

5. Stator nach einem Anspruch 4, **dadurch gekennzeichnet, dass** die Verteilerverbindung (22) jeweils durch zumindest eine kanalförmige oder nutförmige Einbuchtung am Leiterbündel oder durch zumindest einen Durchgangskanal (23) durch das Leiterbündel (10) oder durch zumindest einen vergrößerten Nutspalt zwischen Wandungen der Statornut (5) und dem Leiterbündel (10) gebildet ist.

6. Stator nach einem der vorhergehenden Ansprüche, **dadurch gekennzeichnet, dass** in der jeweiligen Statornut (5) mehrere in axialer Richtung beabstandete Verteilerverbindungen (22) vorgesehen sind.

7. Stator nach einem der vorhergehenden Ansprüche, **dadurch gekennzeichnet, dass** der Nutschlitzkanal (18) der jeweiligen Statornut (5) nach radial innen mit einem Nutverschluss (24) abgedichtet ist.

8. Stator nach einem der vorhergehenden Ansprüche, **dadurch gekennzeichnet, dass** der Nutgrundkanal (14) der jeweiligen Statornut (5) durch eine nutförmige Ausnehmung im Nutgrund der Statornut (5) gebildet ist.

9. Stator nach einem der vorhergehenden Ansprüche, **dadurch gekennzeichnet, dass** die Stützstellen (11) gebildet sind durch Verdrehen von zumindest zwei Stützscheiben (12), insbesondere Blechlamellen (6), des Blechpakets (3) um einen bestimmten Verdrehwinkel (ϕ) um die Statorachse (2) oder durch in der jeweiligen Statornut (5) ausgebildete Halteelemente.

10. Elektrische Maschine (25) mit einem Gehäuse (26), in dem ein Stator (1) nach einem der vorhergehenden Ansprüche angeordnet ist, **dadurch gekennzeichnet, dass** die Statorwicklung (8) an jeder Stirnseite des Stators (1) einen Wickelkopf (8.1) bildet, wobei innerhalb des Gehäuses (26) an jeder Stirnseite des Stators (1) ein den jeweiligen Wickelkopf (8.1) aufnehmender Wickelkopfkühlraum (27) zur Kühlung des jeweiligen Wickelkopfes (8.1) vorgesehen ist, wobei die Statornuten (5) ausgehend von einem der beiden Wickelkopfkühlräume (27) über den Kühlpfad (15) der Statornuten (5) bis in den anderen Wickelkopfkühlraum (25) durchströmbar sind.

## Claims

1. Stator (1) of an electric machine (25) having a stator axis (2) and having a laminated core (3), on which stator teeth (4) and stator slots (5) lying between the stator teeth (4) are formed and which comprises a plurality of sheet-metal laminations (6), wherein the stator teeth (4) are connected to each other via an annular stator yoke (7), wherein, in each of the stator slots (5), a conductor bundle (10) comprising a plurality of conductors (9), in particular a stack of flat wire conductors, is provided for forming an electric stator winding (8), wherein the stator slots (5) each have a slot bottom (5.1), facing the stator yoke (7), and a slot recess (5.2), facing away from the slot bottom (5.1), which is formed, in particular, between two tooth heads (4.1) of the respective stator teeth (4), wherein, in each of the stator slots (5), a plurality of support points (11) spaced apart in the axial direction with respect to the stator axis (2) are formed for supporting the conductor bundle (10) lying in the respective stator slot (5), wherein a slot bottom channel (14) extending in the axial direction is formed between the slot bottom (5.1) of the respective stator slot (5) and the conductor bundle (10) arranged in the stator slot (5), which slot bottom channel can be flowed through at least in sections by a cooling medium, in particular oil, along a cooling path (15) between a slot inlet (16) and a slot outlet (17) of the respective stator slot (5),
**characterized in that**
a slot recess channel (18) extending in the axial direction is formed in the slot recess (5.2) of the respective stator slot (5), which slot recess channel is flow-connected to the slot bottom channel (14) of the same stator slot (5) at at least one distribution point (21) via a distributor connection (22) extending in the radial direction with respect to the stator axis (2), and **in that** the cooling path (15) of the stator slot (5) is formed in such a way that a cooling flow is forced from the slot recess channel (18) via the at least one distributor connection (22) into the slot bottom channel (14) and/or vice versa.

2. Stator according to Claim 1, **characterized in that** the slot inlet (16) of the respective stator slot (5) is provided at one end of the slot recess channel (18), and the slot outlet (17) of the same stator slot (5) is provided at one end of the slot bottom channel (14) facing away from the slot inlet (16), or **in that** the slot inlet (16) of the respective stator slot (5) is arranged at one end of the slot bottom channel (14), and the slot outlet (17) of the same stator slot (5) is arranged at one end of the slot recess channel (18) facing away from the slot inlet (16).

3. Stator according to Claim 1, **characterized in that** the slot inlet (16) and the slot outlet (17) of the same stator slot (5) are both provided either at opposite ends of the slot recess channel (18) or at opposite ends of the slot bottom channel (14), wherein a closure or throttle element for closing or throttling a short-circuit path which bypasses the distributor connection/connections (22) is provided in the slot recess channel (18) or in the slot bottom channel (17).

4. Stator according to any one of the preceding claims, **characterized in that** the distributor connection (22) leads in each case through the conductor bundle (10) and/or around the conductor bundle (10).

5. Stator according to Claim 4, **characterized in that** the distributor connection (22) is formed in each case by at least one channel-shaped or slot-shaped indentation on the conductor bundle or by at least one through-channel (23) through the conductor bundle (10) or by at least one enlarged slot gap between walls of the stator slot (5) and the conductor bundle (10).

6. Stator according to any one of the preceding claims, **characterized in that** a plurality of distributor connections (22) spaced apart in the axial direction are provided in the respective stator slot (5).

7. Stator according to any one of the preceding claims, **characterized in that** the slot recess channel (18) of the respective stator slot (5) is sealed radially inwards by way of a slot closure (24).

8. Stator according to any one of the preceding claims, **characterized in that** the slot bottom channel (14) of the respective stator slot (5) is formed by a slot-shaped recess in the slot bottom of the stator slot (5).

9. Stator according to any one of the preceding claims, **characterized in that** the support points (11) are formed by turning at least two support discs (12), in particular sheet-metal laminations (6), of the laminated core (3) by a certain angle of rotation (φ) around the stator axis (2) or by means of holding elements formed in the respective stator slot (5).

10. Electric machine (25) having a housing (26), in which a stator (1) according to any one of the preceding claims is arranged, **characterized in that** the stator winding (8) forms a winding head (8.1) on each end face of the stator (1), wherein a winding head cooling chamber (27) receiving the respective winding head (8.1) is provided within the housing (26) on each end side of the stator (1) for cooling the respective winding head (8.1), wherein the stator slots (5) can be flowed through, starting from one of the two winding head cooling chambers (27) via the cooling path (15) of the stator slots (5) as far as into the other winding head cooling chamber (25).

## Revendications

1. Stator (1) d'une machine électrique (25) avec un axe (2) de stator et avec un empilage de tôles (3), sur lequel sont formées des dents (4) de stator et des rainures (5) de stator situées entre les dents (4) de stator et qui comprend une pluralité de lamelles de tôle (6), les dents (4) de stator étant reliées entre elles par une culasse (7) de stator annulaire, un faisceau (10) de conducteurs comprenant plusieurs conducteurs (9), en particulier une pile de fils conducteurs plats, étant prévu dans les rainures (5) de stator pour former un enroulement (8) de stator électrique, les rainures (5) de stator comportant chacune une base (5.1) de rainure tournée vers la culasse (7) de stator et une entaille (5.2) de rainure opposée à la base (5.1) de rainure, qui est formée en particulier entre deux têtes de dents (4.1) des dents (4) de stator respectives, plusieurs points d'appui (11) espacés les uns des autres dans la direction axiale par rapport à l'axe (2) de stator étant respectivement formés dans les rainures (5) de stator pour soutenir le faisceau (10) de conducteurs situé dans la rainure (5) de stator respective, un canal de base de rainure (14) s'étendant dans la direction axiale étant formé entre la base (5.1) de rainure de la rainure (5) de stator respective et le faisceau (10) de conducteurs disposé dans la rainure (5) de stator, lequel peut être traversé au moins par sections par un fluide de refroidissement, en particulier de l'huile le long d'un trajet de refroidissement (15) entre une entrée (16) de rainure et une sortie (17) de rainure de la rainure (5) de stator respective,
**caractérisé en ce que**
un canal d'entaille de rainure (18) s'étendant dans la direction axiale est formé dans l'entaille (5.2) de rainure de la rainure (5) de stator respective, lequel est en communication fluidique avec le canal de base de rainure (14) de la même rainure (5) de stator sur au moins un point de distribution (21) par une liaison de distribution (22) s'étendant dans la direction radiale par rapport à l'axe (2) de stator et que le trajet de refroidissement (15) de la rainure (5) de stator est formé de telle manière qu'un flux de refroidissement est forcé depuis le canal d'entaille de rainure (18) dans le canal de base de rainure (14) en passant par l'au moins une liaison de distribution (22) et/ou inversement.

2. Stator selon la revendication 1, **caractérisé en ce que** l'entrée (16) de rainure de la rainure (5) de stator respective est prévue sur une extrémité du canal d'entaille de rainure (18) et la sortie (17) de rainure de la même rainure (5) de stator est prévue sur une extrémité du canal de base de rainure (14) opposée à l'entrée (16) de rainure, ou que l'entrée (16) de rainure de la rainure (5) de stator respective est prévue sur une extrémité du canal de base de rainure (14) et la sortie (17) de rainure de la même rainure (5) de stator est disposée sur une extrémité du canal d'entaille de rainure (18) opposée à l'entrée (16) de rainure.

3. Stator selon la revendication 1, **caractérisé en ce que** l'entrée (16) de rainure et la sortie (17) de rainure de la même rainure (5) de stator sont toutes deux prévues soit sur des extrémités opposées du canal d'entaille de rainure (18), soit sur des extrémités opposées du canal de base de rainure (14), un élément de fermeture ou d'étranglement étant prévu dans le canal d'entaille de rainure (18) ou dans le canal de base de rainure (17) pour fermer ou étrangler un trajet de court-circuit contournant la ou les liaisons de distribution (22).

4. Stator selon l'une des revendications précédentes, **caractérisé en ce que** la liaison de distribution (22) mène à travers le faisceau (10) de conducteurs et/ou tout autour du faisceau (10) de conducteurs.

5. Stator selon une revendication 4, **caractérisé en ce que** la liaison de distribution (22) est formée respectivement par au moins une encoche en forme de canal ou en forme de rainure sur le faisceau de conducteurs ou par au moins un canal de passage (23) à travers le faisceau (10) de conducteurs ou par au moins une fente de rainure agrandie entre des parois de la rainure (5) de stator et le faisceau (10) de conducteurs.

6. Stator selon l'une des revendications précédentes, **caractérisé en ce que** sont prévues dans la rainure (5) de stator respective plusieurs liaisons de distribution (22) espacées dans la direction axiale.

7. Stator selon l'une des revendications précédentes, **caractérisé en ce que** le canal d'entaille de rainure (18) de la rainure (5) de stator respective est rendu étanche vers l'intérieur radialement avec une fermeture (24) de rainure.

8. Stator selon l'une des revendications précédentes, **caractérisé en ce que** le canal de base de rainure (14) de la rainure (5) de stator respective est formé par un évidement en forme de rainure dans la base de rainure de la rainure (5) de stator.

9. Stator selon l'une des revendications précédentes, **caractérisé en ce que** les points d'appui (11) sont formés par la rotation d'au moins deux disques d'appui (12), en particulier de lamelles de tôle (6), de l'empilage de tôles (3) d'un angle de rotation (φ) déterminé autour de l'axe (2) de stator ou par des éléments de maintien formés dans la rainure (5) de stator respective.

10. Machine électrique (25) avec un boîtier (26), dans lequel est disposé un stator (1) selon l'une des revendications précédentes, **caractérisée en ce que** l'enroulement (8) de stator forme une tête d'enroulement (8.1) sur chaque côté frontal du stator (1), un espace de refroidissement (27) de tête d'enroulement recevant la tête d'enroulement (8.1) respective, destiné à refroidir la tête d'enroulement (8.1) respective étant prévu à l'intérieur du boîtier (26) sur chaque côté frontal du stator (1), les rainures (5) de stator pouvant être traversées en partant de l'un des deux espaces de refroidissement (27) de tête d'enroulement jusque dans l'autre espace de refroidissement (25) de tête d'enroulement en passant par le trajet de refroidissement (15) des rainures (5) de stator.
